(19) Europäisches Patentamt
European Patent Office
Office européen des brevets

(11) EP 0 557 308 B2

(12) NEUE EUROPÄISCHE PATENTSCHRIFT

(45) Veröffentlichungstag und Bekanntmachung des Hinweises auf die Entscheidung über den Einspruch:
**28.03.2001 Patentblatt 2001/13**

(45) Hinweis auf die Patenterteilung:
**04.03.1998 Patentblatt 1998/10**

(21) Anmeldenummer: **91918506.6**

(22) Anmeldetag: **02.11.1991**

(51) Int Cl.$^7$: **A01N 57/20**, A01N 47/36

(86) Internationale Anmeldenummer:
**PCT/EP91/02068**

(87) Internationale Veröffentlichungsnummer:
**WO 92/08353 (29.05.1992 Gazette 1992/12)**

(54) **SYNERGISTISCHE HERBIZIDE MITTEL**
SYNERGISTIC HERBICIDAL AGENT
HERBICIDES SYNERGIQUES

(84) Benannte Vertragsstaaten:
**DE FR GB IT**

(30) Priorität: **13.11.1990 DE 4036069**

(43) Veröffentlichungstag der Anmeldung:
**01.09.1993 Patentblatt 1993/35**

(73) Patentinhaber: **Aventis CropScience GmbH
65929 Frankfurt am Main (DE)**

(72) Erfinder:
- **HACKER, Erwin
D-6203 Hochheim am Main (DE)**
- **RÖTTELE, Manfred
D-6233 Kelkheim (DE)**
- **DANNIGKEIT, Walter
D-6233 Kelkheim (DE)**
- **HESS, Martin
D-6500 Mainz (DE)**
- **SCHUMACHER, Hans
D-6093 Flörsheim am Main (DE)**

(56) Entgegenhaltungen:
**EP-A- 192 583** **EP-A- 318 276**
**EP-A- 387 165** **EP-A- 0 252 237**
**EP-A- 0 431 545** **WO-A-89/04606**
**WO-A-90/02486** **WO-A-90/07275**

- **Northeastern Weed Science Society, Vol. 42, 1988, Proceedings, S.B. Horsley: "Tank mixing glyphosate with adjuvants and other herbicides for stripedmaple control", page 84**
- **Patent Abstracts of Japan, Band 11, Nr. 60, C405, Zusammenfassung von JP 61-218503, publ. 1986-09-29 NISSAN CHEM IND LTD et al**

EP 0 557 308 B2

**Beschreibung**

Die Erfindung liegt auf dem Gebiet der Pflanzenschutzmittel, die gegen monokotyle und dikotyle Unkräuter eingesetzt werden können.

Glufosinate-ammonium (Phosphinothricin-ammonium) ist ein bekanntes Herbizid, das über die grünen Pflanzenteile aufgenommen wird (Blattherbizid); siehe "The Pesticide Manual" 8th Edition, British Crop Protection Council 1987, S. 448. Glufosinate-ammonium wird vorwiegend im Nachauflauf-Verfahren zur Bekämpfung von Unkräutern und Ungräsern in Plantagen-Kulturen und auf Nichtkulturland sowie mittels spezieller Applikationstechniken auch zur Zwischenreihenbekämpfung in landwirtschaftlichen Flächenkulturen wie Mais, Baumwolle u.a. eingesetzt.

Glyphosate ist auch ein bekanntes Herbizid zur Bekämpfung von annuellen und perennierenden Unkräutern und Ungräsern. Die Wirkung wird ebenfalls über Nachauflauf-Applikation und Blattaufnahme erzielt; vgl. das genannte "The Pesticide Manual", S. 449.

Der Einsatz erfolgt hauptsächlich in Plantagen-Kulturen und auf Nichtkulturland. Bei handelsüblichen Produkten wird das Mono-Isopropylammonium-Salz von Glyphosate verwendet.

EP-A-252237 offenbart Kombinationen aus Glufosinate Verbindungen und Alkylaminosulfonyl-, Pyrazolylsulfonyl-, Thienylsulfonyl-, Phenylsulfonyl-, Phenoxysulfonyl sowie Benzylsulfonylharnstoffen, wobei den Wirkstoffkombiationen eine Wirksamkeit zugeschrieben wird, die größer sein soll, als aufgrund der Wirkungen der Einzelkomponenten erwartet werden konnte.

Die WO 89/4606 offenbart Kombinationen aus Glyphosate und Metsulfuron-methyl.

Überraschenderweise wurden nun in biologischen Versuchen einige herbizide Wirkstoffe gefunden, die bei gemeinsamer Ausbringung mit Glufosinateammonium oder Glyphosate ausgesprochen synergistische Wirkungssteigerungen ergeben.

Gegenstand der vorliegenden Erfindung sind herbizide Mittel, gekennzeichnet durch einen herbizid wirksamen Gehalt an einer Kombination aus

A) einer oder mehreren Verbindungen der Formeln (A1) und (A2)

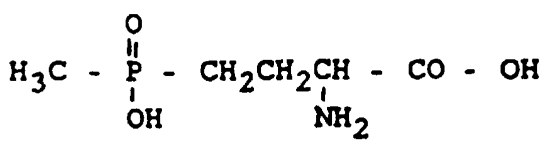

(A1)

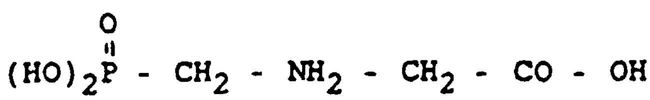

(A2)

oder deren Salzen
und

B) einer oder mehreren Verbindungen der allgemeinen Formel (B)

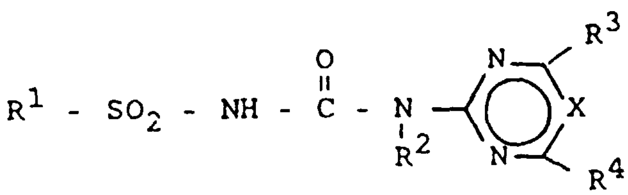

(B)

worin

$R^1$ ein Rest aus der Gruppe 2-Ethoxyphenoxy, 2-Propoxyphenoxy, 2-Isopropoxyphenoxy, 3-(Dimethylamino-carbonyl)-pyrid-2-yl, 3-Ethylsulfonyl-pyrid-2-yl, 3-[N-($C_1$-$C_4$-Alkyl)-N-($C_1$-$C_4$-alkylsulfonyl)-amino]-pyrid-2-yl, (N-Methyl-N-methylsulfonyl - amino),

$R^2$ H oder Methyl,

$R^3$, $R^4$ unabhängig voneinander $C_1$-$C_2$-Alkyl, $C_1$-$C_2$-Alkoxy oder $C_1$-$C_2$-Haloalkoxy und

X CH oder N

bedeuten, oder deren Salzen, ausgenommen die Kombinationen aus einer Verbindung der Formel (A2) mit einor oder mehreren Verbindungen der Formel (B), worin

$R^1$ = 3-Ethylsulfonyl-pyrid-2-yl

bedeutet,
und die Kombinationen aus einer Verbindung der Formel (A1) mit einer oder mehreren Verbindungen der Formel (B), worin

$R^1$ = 2-Ethoxyphenoxy, 2-Propoxyphenoxy, 2-Isopropoxyphenoxy oder (N-Methyl-N-methylsulfonyl - amino)

bedeutet.

Als Salze der Verbindungen der Formel A1 und A2 sind Ammonium-, Mono-, Di- und Trialkylammoniumsalze, Alkalimetall- und Erdalkalimetallsalze bevorzugt. Besonders bevorzugt ist Glufosinate-monoammoniumsalz (A1-1) und Glyphosate-monoisopropylammoniumsalz (A2-1). Glufosinate kommt als D- und L-Form und deren Gemische, z.B. als Racemat vor. Die Formel A1 umfaßt alle genannten Raumformen und deren Gemische, wobei das Racemat und die L-Form und deren Gemische bevorzugt sind.

Verbindungen der Formel (B) können Salze mit Basen bilden, bei denen der Wasserstoff der $SO_2NH$-Gruppe durch ein für die Landwirtschaft geeignetes Kation ersetzt wird, z.B. Metallsalze wie Alkali- oder Erdalkalimetallsalze, oder Ammoniumsalze oder Salze mit organischen Aminen. Auch Säureadditionsalze mit z.B. HCl, HBr, $H_2SO_4$ und $HNO_3$ sind möglich.

Geeignete Verbindungen der Formel (B) sind beispielsweise

1-[(2-Ethoxyphenoxy)-sulfonyl]-3-(4,6-dimethoxy-pyrimid-2-yl)-harnstoff (B1),

1-[(2-n-Propoxyphenoxy)-sulfonyl]-3-(4,6-dimethoxy-pyrimid-2-yl)-harnstoff (B2),

1-[(2-Isopropoxyphenoxy)-sulfonyl]-3-(4,6-dimethoxy-pyrimid-2-yl)-harnstoff (B3),

1-[(3-Dimethylaminocarbonyl-pyridin-2-yl)-sulfonyl]-3-(4,6-dimethoxypyrimidin-2-yl)-harnstoff (B5; Nicosulfuron, SL-950),

1-[(3-Ethylsulfonyl-pyridin-2-yl)-sulfonyl]-3-(4,6-dimethoxy-pyrimid-2-yl)-harnstoff (B6; DPX-E 9636),

1-[3-(N-Methyl-N-methylsulfonyl-amino)-pyrid-2-ylsulfonyl]-3-(4,6-dimethoxy-pyrimid-2-yl)-harnstoff (B7),

1-[3-(N-Ethyl-N-methylsulfonyl-amino)-pyrid-2-ylsulfonyl]-3-(4,6-dimethoxy-pyrimid-2-yl)-harnstoff (B8),

1-[3-(N-Methyl-N-ethylsulfonyl-amino)-pyrid-2-ylsulfonyl]-3-(4,6-dimethoxy-pyrimid-2-yl)-harnstoff (B9),

1-[3-(N-Methyl-N-methylsulfonyl-amino)-pyrid-2-ylsulfonyl]-3-(4,6-dimethyl-pyrimid-2-yl)harnstoff (B10),

1-[3-(N-Methyl-N-methylsulfonyl-amino)-pyrid-2-ylsulfonyl]-3-(4-methoxy-6-methyl-pyrimid-2-yl)-harnstoff (B11) und

1-(N-Methyl-N-methylsulfonyl-aminosulfonyl)-3-(4,6-dimethoxypyrimid-2-yl)-harnstoff (B12; Amidosulfuron).

Bevorzugt sind erfindungsgemäße herbizide Mittel mit Kombinationen der Verbindung (A1-1) mit ein oder mehreren Verbindungen aus der Gruppe (B1) bis B12), insbesondere (B5), (B7), (B8) (B9), (B10) und (B11).

Bevorzugt sind außerdem erfindungsgemäße herbizide Mittel mit Kombinationen der Verbindung (A2-1) mit ein oder mehreren Verbindungen aus der Gruppe (B1) bis (B12), insbesondere (B1), (B2), (B3), (B5) und (B12).

Die Verbindungen der Formeln (B1) bis (B3) sind 1-[(2-Alkoxyphenoxy)-sulfonyl]-3-(4,6-dimethoxy-pyrimid-2-yl)-harnstoffe und aus EP-A-0342569 bekannt. Im Vor- und Nachauflauf-Verfahren appliziert, werden sie von den annuellen Kulturpflanzenarten wie Getreide, Reis und Mais toleriert. Die Wirkung erstreckt sich über ein breites Spektrum von annuellen und perennierenden Arten von Unkäutern, Ungräsern und Cyperaceen.

Die Verbindung der Formel (B5) ist als Nicosulfuron oder SL-950 bekannt (siehe F. Kimura et al., Brighton Crop Protection Conference-Weeds-1989, Seiten 29-34). Nicosulfuron (SL-950), d.h. 3-(4,6-Dimethoxypyrimidin-2-yl)-1-(3-dimethylaminocarbonyl-pyridin-2-yl-sulfonyl)-harnstoff, ist ein Sulfonylharnstoff-Herbizid, das bisher hauptsächlich zur Bekämpfung von Gräsern und breitblättrigen Unkräutern in Mais eingesetzt worden ist. Im Nachauflaufverfahren appliziert, werden eine Vielzahl von annuellen und perennierenden Unkräutern und Ungräsern kontrolliert.

Die Verbindung der Formel (B6) (DPX-E 9636) ist aus Brighton Crop Protection Conf.-Weeds-1989, S. 23 ff. bekannt.

Die Verbindungen der Formel (B7) bis (B11) sind aus der Deutschen Patentanmeldung P 40 00 503.8 bekannt.

Amidosulfuron (B12) ist aus EP-A-0 131 258 und Z. Pfl. Krankh. Pfl. Schutz, Sonderheft XII, S. 489-497 (1990) bekannt.

Allen genannten Herbiziden ist gemeinsam, daß sie im Nachauflauf über die Blätter (teilweise oder vollständig) aufgenommen werden und so zur Wirkungs-Entfaltung kommen.

Einige Kombinationen von Verbindungen der Formel (A2) und Sulfonylharnstoffen sind bereits bekannt; siehe S. B. Horsley, Proc. Northeast. Weed Sci. Soc. 42, 84 (1988); H. R. Mashadi und J. O. Evans, Res. Prog. Rep. West. Soc. Weed Sci. 1987 Meet., 348-50; K. E. Bowren, G. S. Noble, Res. Rep. Expert Comm. Weeds West. Can. (33 Meet) Vol. 2, 240 (1986); D. G. Pchajek, J. D. Gingerich, Res. Rep. Expert Comm. Weeds West. Can. (34 Meet.) Vol. 2, 524-26 (1987).

Die erfindungsgemäßen herbiziden Mittel weisen eine ausgezeichnete herbizide Wirksamkeit gegen ein breites Spektrum wirtschaftlich wichtiger mono- und dikotyler Schadpflanzen auf.

Bei Applikation der Wirkstoffkombinationen auf die grünen Pflanzenteile im Nachauflaufverfahren tritt sehr rasch nach der Behandlung ein drastischer Wachstumsstopp ein, und die Unkrautpflanzen bleiben in dem zum Applikationszeitpunkt vorhandenen Wuchsstadium stehen oder sterben nach einer gewissen Zeit mehr oder weniger schnell ab. Auf diese Weise werden Unkräuter sehr effektiv bekämpft. Im Einsatz zur Bekämpfung von Unkräutern in Plantagen, wird eine für die Kulturpflanzen schädliche Unkrautkonkurrenz nachhaltig durch den Einsatz der neuen erfindungsgemäßen Mittel beseitigt.

Mit den erfindungsgemäßen Wirkstoffkombinationen wird z. B. eine herbizide Wirkung erreicht, die über das hinausgeht, was als additive Wirkung der Einzelkomponenten zu erwarten gewesen ist. Solche Wirkungssteigerungen erlauben es, die Einsatzmengen der einzelnen Wirkstoffe erheblich zu reduzieren. Bei vergleichbaren Einsatzmengen ist das bekämpfte Unkraut/Ungras-Spektrum durch die synergistischen Effekte wesentlich breiter. Gleichzeitig werden bei den meisten Kombinationen Eigenschaften, die in der praktischen Anwendung äußerst wichtig sind, wesentlich verbessert. Dazu zählen z.B. die Wirkungsgeschwindigkeit, die Dauerwirkung, die Anwendungsflexibilität u. a.. Dies erlaubt eine umfassende schnelle, dauerhafte und billige Ungras- und Unkrautbekämpfung. Solche Eigenschaften sind deshalb wirtschaftlich fortschrittlich, weil sie dem Anwender erhebliche Vorteile bei der praktischen Unkrautbekämpfung bieten, indem er Unkräuter billiger oder rascher oder dauerhafter bekämpfen kann und dadurch in einem Kulturpflanzenbestand mehr Ertrag erntet.

Die Wahl des Gewichtsverhältnisses und die Aufwandmengen sind beispielsweise von Mischungspartner, Entwicklungsstadium der Unkräuter oder Ungräser, Unkrautspektrum, Umweltfaktoren und Klimabedingungen abhängig.

Die Gewichtsverhältnisse A : B können daher innerhalb weiter Grenzen schwanken und liegen in der Regel bei 1500:1 bis 1 : 10 bezogen auf das Gewicht.

Vorzugsweise werden Gewichtsverhältnisse von 200:1 bis 1:2, insbesondere 50:1 bis 5:1, angewendet.

Die Aufwandmengen der Herbizide A in den Wirkstoffkombinationen liegen bevorzugt zwischen 10 und 2500 g/ha, bezogen auf aktiven Wirkstoff. Vorzugsweise wird Glufosinate in Mengen von 10 bis 1200 g/ha und Glyphosate in Mengen von 500 bis 2000 g/ha angewendet. Die Aufwandmengen von Verbindungen des Typs B sind in der Regel von 2 bis 200 g/ha, vorzugsweise von 2 bis 120 g/ha, insbesondere von 2 bis 100 g/ha, bezogen auf aktiven Wirkstoff.

Die erfindungsgemäßen Wirkstoffkombinationen können sowohl als Mischformulierungen der beiden Komponenten vorliegen, die dann in üblicher Weise mit Wasser verdünnt zur Anwendung gebracht werden, oder als sogenannte Tankmischungen durch gemeinsame Verdünnung der getrennt formulierten Komponenten mit Wasser hergestellt werden.

Die Verbindungen A und B oder deren Kombinationen können auf verschiedene Art formuliert werden, je

nachdem welche biologischen und/oder chemisch-physikalischen Parameter vorgegeben sind. Als Formulierungsmöglichkeiten kommen beispielsweise in Frage: Spritzpulver (WP), emulgierbare Konzentrate (EC), wäßrige Lösungen (SL), Emulsionen (EW) wie Öl-in Wasser- und Wasser-in-Öl-Emulsionen, versprühbare Lösungen oder Emulsionen, Dispersionen auf Öl- oder Wasserbasis, Suspoemulsionen, Stäubemittel (DP), Beizmittel, Granulate zur Boden- oder Streuapplikation oder wasserdispergierbare Granulate (WG), ULV-Formulierungen, Mikrokapseln oder Wachse.

Diese einzelnen Formulierungstypen sind im Prinzip bekannt und werden beispielsweise beschrieben in: Winnakker-Küchler, "Chemische Technologie", Band 7, C. Hauser Verlag München, 4. Aufl. 1986; van Valkenburg, "Pesticides Formulations", Marcel Dekker N. Y., 2nd Ed. 1972-73; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H. v. Olphen, "Introduction to Clay Colloid Chemistry"; 2nd Ed., J. Wiley & Sons, N.Y., Marsden, "Solvents Guide", 2nd Ed., Interscience, N.Y. 1950; McCutcheon's, "Detergents and Emulsifiers Annual", MC Publ. Corp., Ridgewood N.J.; Sisley and Wood, "Encyclopedia of Surface Active Agents", Chem. Publ. Co. Inc., N. Y. 1964; Schönfeldt, Grenzflächenaktive Äthylenoxidaddukte", Wiss. Verlagsgesell., Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Safenern, Düngemitteln und/oder Wachstumsregulatoren herstellen, z. B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Netzmittel, z. B. polyoxethylierte Alkylphenole, polyoxethylierte Fettalkohole oder -Fettamine, Fettalkoholpolyglykolethersulfate, Alkansulfonate oder Alkylbenzolsulfonate und Dispergiermittel, z. B. ligninsulfonsaures Natrium, 2,2'-dinaphthylmethan-6,6'disulfonsaures Natrium, dibutylnaphthalin-sulfonsaures Natrium oder auch oleylmethyltaurinsaures Natrium enthalten.

Emulgierbare Konzentrate werden durch Auflösen des Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffes mit fein verteilten festen Stoffen, z. B. Talkum, natürlichen Tonen wie Kaolin, Bentonit und Pyrophyllit oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten übichen Weise - gewünschtenfalls in Mischung mit Düngemitteln - granuliert werden.

Die agrochemischen Zubereitungen enthalten in der Regel 0,1 bis 99 Gewichtsprozent, insbesondere 2 bis 95 Gew.-%, Wirkstoffe A + B. Die Konzentrationen der Wirstoffe A + B können in den Formuleriungen verschieden sein.

In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration etwa 1 bis 85 Gew.-%, vorzugsweise 5 bis 80 Gew.-% betragen. Staubförmige

Formulierungen enthalten etwa 1 bis 25 Gew.-%, meistens 5 bis 20 Gew.-% an Wirkstoff, versprühbare Lösungen etwa 0,2 bis 25 Gew.-%, vorzugsweise 2 bis 20 Gew.-% Wirkstoff. Bei Granulaten wie wasserdispergierbaren Granulaten hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations-, Lösungsmittel, Füll- oder Trägerstoffe.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Bevorzugt ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Folgende Beispiele dienen zur Erläuterung der Erfindung:

A. Formulierungsbeispiele

a) Ein Stäubmittel wird erhalten, indem man 10 Gew.-Teile einer erfindungsgemäßen Wirkstoffkombination und 90 Gew.-Teile Talkum als Inertstoff mischt und in einer Schlagmühle zerkleinert.

b) Ein in Wasser leicht dispergierbares, benetzbares Pulver wird erhalten, indem man 25 Gewichtsteile Wirkstoff A + B, 64 Gewichtsteile kaolinhaltigen Quarz als Inertstoff, 10 Gewichtsteile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gewichtsteile Wirkstoff A + B mit 6 Gew.-Teilen Alkylphenolpolyglykolether (®Triton X 207), 3 Gew.-Teilen Isotridecanolpolyglykolether (8 EO) und 71 Gew.-Teilen paraffinischem Mineralöl (Siedebereich z.B. ca. 255 bis über 277 °C) mischt und in einer Reibkugelmühle auf eine Feinheit von unter 5 Mikron vermahlt.

d) Ein emulgierbares Konzentrat wird erhalten aus 15 Gew.-Teilen Wirkstoff A+B, 75 Gew.-Teilen Cyclohexanon als Lösemittel und 10 Gew.-Teilen oxethyliertes Nonylphenol als Emulgator.

e) Ein in Wasser dispergierbares Granulat wird erhalten indem man

| | |
|---|---|
| 75 Gewichtsteile | Wirkstoffe A + B, |
| 10 Gewichtsteile | ligninsulfonsaures Calcium, |
| 5 Gewichtsteile | Natriumlaurylsulfat, |
| 3 Gewichtsteile | Polyvinylalkohol und |
| 7 Gewichtsteile | Kaolin |

mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

| | |
|---|---|
| 25 Gewichtsteile | Wirkstoff A + B, |
| 5 Gewichtsteile | 2,2'-dinapthylmethan-6,6'-disulfonsaures Natrium, |
| 2 Gewichtsteile | oleoylmethyltaurinsaures Natrium, |
| 1 Gewichtsteil | Polyvinylalkohol, |
| 17 Gewichtsteile | Calciumcarbonat und |
| 50 Gewichtsteile | Wasser |

auf einer Kolloidmühle homogenisiert und vorzerkleinert, anschließend auf einer Perlmühle mahlt und die so erhaltene Suspension in einen Sprühturm mittels einer Einstoffdüse zerstäubt und trocknet.

B. Biologische Beispiele

Verschiedene wirtschaftlich wichtige Unkräuter und Ungräser waren unter natürlichen Freilandbedingungen aufgewachsen. Nach Erreichen von bestimmten Entwicklungsstadien (ausgedrückt durch die Anzahl der entfalteten Blätter bzw. durch die Wuchshöhe) wurden die Herbizid-Mischungen mittels spezieller Parzellen-Spritzgeräte ausgebracht. In der Regel wurden 300-400 Liter Wasser je Hektar verwendet und die Spritzbrühe mit einem Druck von 2,5 bar ausgebracht.
Im Zeitraum von 3-8 Wochen nach der Applikation wurde die herbizide Wirksamkeit der behandelten Teilstücke im Vergleich zu unbehandelten Kontroll-Parzellen durch visuelle Bonituren bewertet. Dabei wurde die Schädigung sowie die Entwicklung aller oberirdischen Pflanzenteilen erfaßt.
Bei den Kombinationen wurde unterschieden zwischen dem errechneten und dem gefundenen Wirkungsgrad. Der errechnete, theoretisch zu erwartende Wirkungsgrad einer Kombination wird ermittelt nach der Formel von S. R. Colby: Calculation of synergistic and antagonistic responses of herbicide combinations, Weeds 15 (1967) 20-22.
Diese Formel lautet:

$$E = X + Y - \frac{X \cdot Y}{100}$$

wobei

X = % Schädigung durch Herbizid A bei x kg/ha Aufwandmenge:

Y = % Schädigung durch Herbizid B bei y kg/ha Aufwandmenge;

E = die zu erwartende Schädigung durch die Herbidzide A + B bei x + y kg/ha.

Ist die tatsächliche Schädigung größer als die rechnerisch zu erwartende, so ist die Wirkung der Kombination mehr als additiv, d. h. es liegt ein synergistischer Wirkungseffekt vor.

In der Mehrzahl der Fälle ist die synergistische Wirkungssteigerung jedoch so hoch, daß auf das Kriterium nach Colby verzichtet werden kann; die Wirkung der Kombination übersteigt dann deutlich die formale (zahlenmäßige) Summe der Wirkungen der Einzelstoffe.

Es sei besonders darauf hingewiesen, daß eine Beurteilung des Synergismus bei den hier eingesetzten Wirkstoffen die stark unterschiedlichen Aufwandmengen der Einzelwirkstoffe berücksichtigen muß. Es ist somit nicht sinnvoll, die Wirkungen der Wirkstoffkombinationen und die Einzelwirkstoffe jeweils bei gleichen Aufwandmengen zu vergleichen. Die erfindungsgemäß einzusparenden Wirkstoffmengen werden nur durch die überadditive Wirkungssteigerung bei Einsatz der kombinierten Aufwandmengen oder durch die Verringerung der Aufwandmengen beider Einzelwirkstoffe in der Kombination im Vergleich zu den Einzelwirkstoffen bei jeweils gleicher Wirkung erkennbar.

Vergleichs-Beispiel 1

Tabelle 1

| Kombination (A1+1) + (B1) gegen Cyperus rotundus | | |
|---|---|---|
| Herbizider Wirkstoff | Dosis g ai/ha | Wirkung in % |
| (A1-1) | 400 | 0 |
| | 800 | 30 |
| | 1200 | 53 |
| | 1500 | 55 |
| (B1) | 30 | 5 |
| | 60 | 5 |
| | 120 | 25 |
| (A1-1)+(B1) | 400+ 30 | 35 |
| | 400+ 60 | 55 |
| | 400+120 | 68 |
| | 800+ 30 | 90 |
| | 800+ 60 | 90 |
| | 800+120 | 96 |
| | 1200+ 30 | 92 |
| | 1200+ 60 | 96 |
| | 1200+120 | 97 |

Abkürzungen zu Tabelle 1
ai = active ingredient (= bezogen auf reinen Wirkstoff)
(A1-1) = Glufosinate-monoammoniumsalz, als 20 % wäßrige Formulierung (SL 20) in den Tankmix gegeben.
B1 = 1-[(2-Ethoxyphenoxy)sulfonyl]-3-(4,6-dimethoxypyrimid-2-yl)-harnstoff als 20 %iges wasserdispergierbares Pulver in den Tankmix gegeben.

Beispiel 2:

Cyperus rotundus wurde kurz vor Blühbeginn (Stadium 51) behandelt und die Schädigung nach Applikation

bonitiert (s. Tabelle 2).

Tabelle 2

| Kombination (A2-1) + (B1) gegen Cyperus rotundus | | |
|---|---|---|
| Herbizider Wirkstoff | Dosis g ai/ha | Wirkung in % |
| (A2) | 1080 | 80 |
| | 2160 | 93 |
| (B1) | 60 | 5 |
| (A2-1)+(B1) | 1080+ 60 | 95 |

Abkürzungen zu Tabelle 2:
(A2-1) = Glyphosate-monoisopropylammoniumsalz als wäßrige Formulierung mit 480 g/l in den Tankmix gegeben.
(B1) = siehe Tabelle 1

Beispiel 3

Analog Vergleichsbeispiel 1 und Beispiel 2 wurden die in Tabelle 3 angegebenen Ergebnisse erhalten.

Tabelle 3

| Kombination (A1-1) + (B5) gegen perennierende und annuelle Arten | | | | | |
|---|---|---|---|---|---|
| Herbizide | Dosis g ai//ha | CYPRO | AMASP | TAGMI | COMBE |
| (A1) | 1000 | 85 | 100 | 100 | 97 |
| | 400 | 35 | 40 | 55 | 42 |
| (B5) | 30 | 0 | 0 | 0 | 2 |
| | 20 | 0 | 0 | 0 | 0 |
| | 10 | 0 | 0 | 0 | 7 |
| (A1-1)+(B5) | 400+10 | 50 | 100 | 100 | 75 |
| | 400+20 | 60 | 100 | 100 | 85 |
| | 400+30 | 80 | 100 | 100 | 87 |

Anmerkungen zu Tabelle 3:
Behandlung: Nachauflauf 4-6 Blattstadium bis Beginn Blüte/25-50 cm Wuchshöhe
Auswertung: 28-57 Tage nach Applikation

Unter natürlichen Verhältnissen wurden geprüft:

- CYPRO = Cyperus rotundus
- AMASP = Amaranthus spinosus
- TAGMI = Tagmites minor
- COMBE = Commelina benghalensis

(A1-1) = siehe Tabelle 1
(B5) = Nicosulfuron als 20 %iges wasserdispergierbares Pulver in den Tankmix gegeben.

Beispiel 4

Analog zu den Beispielen und Vergleichsbeispielen 1 bis 3 wurden die in Tabelle 4 angegebenen Resultate erhalten.

Tabelle 4

| Kombination (A1-1) + (B5) gegen annuelle Arten | | | | | | | |
|---|---|---|---|---|---|---|---|
| Herbizide | Dosis g ai/ha | BRSNN | MEUIN | VICVI | GALAP | POLCU | URTDI |
| (A1-1) | 600 | 72 | 98 | 92 | 0 | 92 | 50 |
| | 300 | 20 | 25 | 42 | 0 | 57 | 10 |

Tabelle 4 (fortgesetzt)

| Kombination (A1-1) + (B5) gegen annuelle Arten | | | | | | | |
|---|---|---|---|---|---|---|---|
| Herbizide | Dosis g ai/ha | BRSNN | MEUIN | VICVI | GALAP | POLCU | URTDI |
| (B5) | 40 | 87 | 0 | 0 | 25 | 52 | 85 |
| (A1-1)+(B5) | 300+40 | 95 (E=79) | 85 | 62 | 75 | 100 (E=80) | 96 (E=86) |

Anmerkungen zu Tabelle 4:
Behandlung: Im 3-8 Blattstadium
Auswertung: 30 Tage nach Bonitur
Abkürzungen: BRSNN = Brassica napus napus
MEUIN = Melilotus indicus
VICVI = Vicia villosa
GALAP = Galium aparine
POLCU = Polygonum cuspidatum
URTDI = Urtica dioica
E = Erwartungswert nach COLBY
(A1-1) = s. Tabelle 1
(B5) = s. Tabelle 3
ai = s. Tabelle 1

Beispiel 5

Analog zu den Vergleichsbeispielen und Beispielen 1 bis 4 wurden die Ergebnisse in der Tabelle 5 erhalten

Tabelle 5

| Kombination (A1-1) + (B7) | | | | | |
|---|---|---|---|---|---|
| Herbizide | Dosis g ai/ha | GALAP | VERPE | VIOAR | ECHCG |
| (A1-1) | 1000 | 80 | 90 | 85 | 95 |
| | 600 | 70 | 80 | 35 | 92 |
| | 400 | 25 | 50 | 0 | 50 |
| | 200 | 0 | 0 | 0 | 0 |
| | 100 | 0 | 0 | 0 | 0 |
| (B7) | 25 | 50 | 0 | 65 | 85 |
| | 12,5 | 0 | 0 | 40 | 75 |
| (A1-1)+(B7) | 200+12,5 | 95 | 50 | 65 | 98 |
| | 200+25 | 90 | 70 | 80 | 95 |
| | 400+12,5 | 98 | 90 | 89 | 90 (E=88) |
| | 400+25 | 80 | 93 | 97 | 98 (E=92) |

Abkürzungen: GALAP = Galium aparine
VERPE = Veronica persicaria
VIOAR = Viola arvense
ECHCG = Echinochloa crus galli
(A1-1) = s. Tabelle 1
(B7) = 1-[3-(N-Methyl-N-methylsulfonylamino)-pyrid-2-yl-sulfonyl]-3-(4,6-dimethoxypyrimid-2-yl)-harnstoff
Applikation: Im 1-8-Blattstadium,
Auswertung: 6 Wochen nach Applikation

## Patentansprüche

**1.** Herbizide Mittel gekennzeichnet durch einen herbizid wirksamen Gehalt an einer synergistischen Kombination aus

A) einer oder mehreren Verbindungen der Formeln (A1) und (A2)

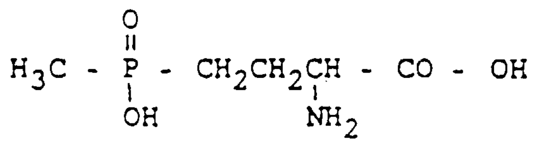

(A1)

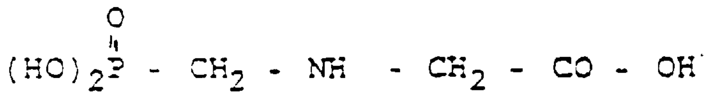

(A2)

oder deren Salzen
und

B) einer oder mehreren Verbindungen der allgemeinen Formel (B)

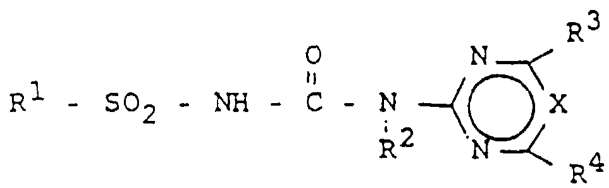

(B)

worin

$R^1$ ein Rest aus der Gruppe 2-Ethoxyphenoxy, 2-Propoxyphenoxy, 2-Isopropoxyphenoxy, 3-(Dimethylamino-carbonyl)-pyrid-2-yl, 3-Ethylsulfonyl-pyrid-2-yl, 3-[N-($C_1$-$C_4$-Alkyl)-N-($C_1$-$C_4$-alkylsulfonyl)-amino]-pyrid-2-yl, (N-Methyl-N-methylsulfonyl-amino).
$R^2$ H oder Methyl,
$R^3$, $R^4$ unabhängig voneinander $C_1$-$C_2$-Alkyl, $C_1$-$C_2$-Alkoxy oder $C_1$-$C_2$-Haloalkoxy und
X CH oder N

bedeuten, oder deren Salzen, ausgenommen die Kombinationen aus einer Verbindung der Formel (A2) oder deren Salzen mit einer oder mehreren Verbindungen der Formel (B) oder deren Salzen, worin

$R^1$ = 3-Ethylsulfonyl-pyridyl-2-yl bedeutet

und die Kombinationen aus einer Verbindung der Formel (A1) oder deren Salzen mit einer oder mehreren Verbindungen der Formel (B) oder deren Salzen, worin

$R^1$ = 2-Ethoxyphenoxy, 2-Propoxyphenoxy, 2-Isopropoxyphenoxy oder (N-Methyl-N-methylsulfonyl-amino-)

bedeutet.

**2.** Mittel nach Anspruch 1, dadurch gekennzeichnet, daß sie eine Verbindung der Formel (A1) oder (A2) oder deren Salze und eine Verbindung der Formel (B) oder deren Salze enthalten.

**3.** Mittel nach Anspruch 1 oder 2, dadurch gekennzeichnet, daß sie 0,1 bis 99 Gew.-% der Wirkstoffe A und B neben üblichen Formulierungshilfsmitteln enthalten.

**4.** Mittel nach einem oder mehreren der Ansprüche 1 bis 3, dadurch gekennzeichnet, daß sie die Wirkstoffe A und

B im Gewichtsverhältnis 1500 : bis 1 : 10 enthalten.

**5.** Mittel nach Anspruch 4, dadurch gekennzeichnet, daß das Gewichtsverhältnis 200 : 1 bis 1 : 2 beträgt.

**6.** Verfahren zur Herstellung eines Mittels nach einem oder mehreren der Ansprüche 1 bis 5, dadurch gekennzeichnet, daß man ein oder mehrere Verbindungen A mit ein oder mehreren Verbindungen B analog einer üblichen Pflanzenschutzmittelformulierung aus der Gruppe, enthaltend Spritzpulver, emulgierbare Konzentrate, wäßrige Lösungen, Emulsionen, versprühbare Lösungen (tank-mix), Dispersionen auf Öl- oder Wasserbasis, Suspoemulsionen, Stäubemittel, Beizmittel, Boden- oder Streugranulate, wasserdispergierbare Granulate, ULV-Formulierungen, Mikrokapseln und Wachse, formuliert.

**7.** Verfahren zur Bekämpfung von unerwünschten Pflanzen, dadurch gekennzeichnet, daß man auf diese eine herbizid wirksame Menge einer der in einem oder mehreren der Ansprüche 1 bis 5 definierten Kombinationen von Wirkstoffen A+B appliziert.

**8.** Verfahren nach Anspruch 7, dadurch gekennzeichnet, daß die Aufwandmengen für die Verbindungen A von 10 bis 2500 g/ha und die Aufwandmengen für die Verbindungen B von 2 bis 200 g/ha betragen.

**9.** Verwendung von nach einem oder mehreren der Ansprüche 1 bis 5 definierten Mitteln zur Bekämpfung von unerwünschtem Pflanzenwuchs.

**Claims**

**1.** A herbicidal composition with a herbicidally effective content of a synergistic combination of

A) one or more compounds of the formulae (A1) and (A2)

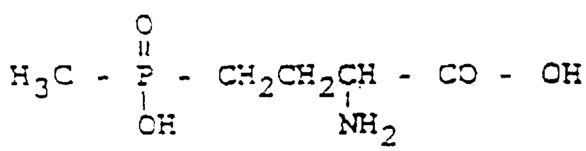

(A1)

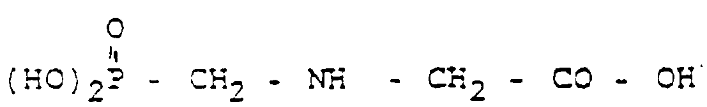

(A2)

or salts thereof
and

B) one or more compounds of the formula (B)

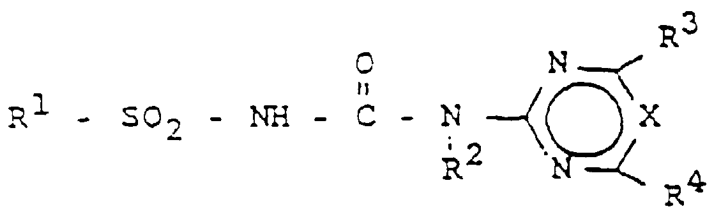

(B)

where

| | |
|---|---|
| $R^1$ | is a radical from the group comprising 2-ethoxyphenoxy, 2-propoxyphenoxy, 2-isopropoxyphenoxy, 3-(dimethylaminocarbonyl)pyrid-2-yl, )pyrid-2-yl, 3-ethylsulfonylpyrid-2-yl, 3-[N-($C_1$-$C_4$-alkyl)-N-($C_1$-$C_4$-alkylsulfonyl)amino]pyrid-2-yl, (N-methyl-N-methylsulfonylamino), |
| $R^2$ | is H or methyl, |
| $R^3$ and $R^4$ | independently of one another are $C_1$-$C_2$-alkyl, $C_1$-$C_2$-alkoxy or $C_1$-$C_2$-haloalkoxy and |
| X | is CH or N, |

or salts thereof, with the exception of the combinations of a compound of the formula (A2) or salts thereof with one or more compounds of the formula (B) or salts thereof in which

$R^1$ = 3-ethylsulfonylpyrid-2-yl

and the combinations of a compound of the formula (A1) or salts thereof with one or more compounds of the formula (B) or salts thereof in which

$R^1$ = 2-ethoxyphenoxy, 2-propoxyphenoxy, 2-isopropoxyphenoxy or (N-methyl-N-methylsulfonylamino).

**2.** A composition as claimed in claim 1, which contains a compound of the formula (A1) or (A2) or salts thereof and a compound of the formula (B) or salts thereof.

**3.** A composition as claimed in claim 1 or 2, which contains, besides customary formulation auxiliaries, 0.1 to 99 % by weight of the active substances A and B.

**4.** A composition as claimed in one or more of claims 1 to 3, which contains the active substances A and B in a ratio by weight of 1500 : 1 to 1 : 10.

**5.** A composition as claimed in claim 4, in which the ratio by weight is 200 : 1 to 1 : 2.

**6.** A process for the preparation of a composition as claimed in one or more of claims 1 to 5, which comprises formulating one or more compounds A with one or more compounds B analogously to a customary crop protection agent formulation from the group comprising wettable powders, emulsifiable concentrates, aqueous solutions, emulsions, sprayable solutions (tank mix), dispersions on an oil or water base, suspoemulsions, dusting agents, seed-dressing agents, soil granules or granules for broadcasting, water-dispersible granules, ULV formulations, microcapsules and waxes.

**7.** A method of controlling undesired plants, which comprises applying a herbicidally effective amount of one of the combinations of active substances A+B, as defined in one or more of claims 1 to 5, to these plants.

**8.** The method as claimed in claim 7, in which the dosage rates for the compounds A are from 10 to 2500 g/ha and the dosage rates for the compounds B are from 2 to 200 g/ha.

**9.** The use of a composition as defined in one or more of claims 1 to 5 for controlling undesired plant growth.

## Revendications

**1.** Agents herbicides caractérisés par une teneur efficace en herbicide d'une combinaison synergique

A) d'un ou plusieurs composés de formules (A1) et (A2) :

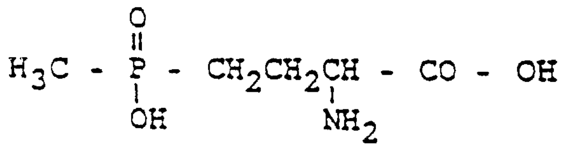

(A1)

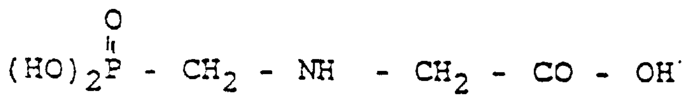

(A2)

ou de leurs sels
et

B) d'un ou plusieurs composés de formule générale (B) :

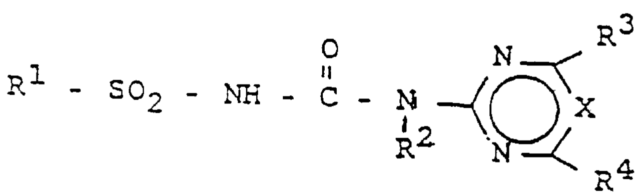

(B)

où

$R^1$ représente un reste pris parmi les groupes 2-éthoxyphénoxy, 2-propoxyphénoxy, 2-isopropoxyphénoxy, 3-(diméthylaminocarbonyl)pyrid-2-yle, -2-yle, 3-éthylsulfonyl-pyrid-2-yle, 3-[N-(alkyl en $C_1$-$C_4$)-N-(alkyl en $C_1$-$C_4$ sulfonyl)-amino]-pyrid-2-yle, (N-méthyl-N-méthylsulfonyl-amino),
$R^2$ représente H ou un groupe méthyle,
$R^3$, $R^4$ représentent, indépendamment l'un de l'autre, des groupes alkyle en $C_1$-$C_2$, alcoxy en $C_1$-$C_2$ ou halogénoalcoxy en $C_1$-$C_2$, et
X représente CH ou N,

ou leurs sels, à l'exception des combinaisons d'un composé de formule (A2) ou ses sels avec un ou plusieurs composés de formule (B) ou leurs sels, où

$R^1$ = 3-éthylsulfonyl-pyrid-2-yle,

et représente les combinaisons d'un composé de formula (A1) ou ses sels avec un ou plusieurs composés de formula (B) ou leurs sels, où

$R^1$ = 2-éthoxyphénoxy, 2-propoxyphénoxy, 2-isopropoxyphénoxy ou (N-méthyl-N-méthyisulfonyi-amino).

**2.** Agents selon la revendication 1, caractérisés en ce qu'ils contiennent un composé de formule (A1) ou (A2) ou ses sels et un composé de formule (B) ou ses sels.

**3.** Agents selon la revendication 1 ou 2, caractérisés en ce qu'ils contiennent de 0,1 à 99 % en poids de substances actives A et B en plus des adjuvants de formulation usuels.

**4.** Agents selon une ou plusieurs des revendications 1 à 3, caractérisés en ce qu'ils contiennent les substances actives A et B dans un rapport pondéral de 1500:1 à 1:10.

**5.** Agents selon la revendication 4, caractérisés en ce que le rapport pondéral va de 200:1 à 1:2.

**6.** Procédé de préparation d'un agent selon une ou plusieurs des revendications 1 à 5, caractérisé en ce que l'on formule un ou plusieurs composés A avec un ou plusieurs composés B de façon analogue à une formulation usuelle d'agents phytoprotecteurs pris dans le groupe comportant des poudres mouillables, des concentrés émulsionnables, des solutions aqueuses, des émulsions, des solutions pulvérisables (tank-mix), des dispersions de type aqueux ou huileux, des émulsions en suspension, des poudres pour poudrage, des désinfectants, des granulés pour application par épandage ou au niveau du sol, des granulés à disperser dans l'eau, des formulations ULV, des microcapsules et des cires.

**7.** Procédé de lutte contre les mauvaises herbes, caractérisé en ce que l'on applique sur celles-ci une quantité efficace à activité herbicide d'une combinaison des substances actives A+B, définies dans une ou plusieurs des revendications 1 à 5.

**8.** Procédé selon la revendication 7, caractérisé en ce que les concentrations d'emploi pour les composés A vont de 10 à 2500 g/ha, et les concentrations d'emploi pour les composés B de 2 à 200 g/ha.

**9.** Emploi des agents définis dans l'une quelconque des revendications 1 à 5, pour la lutte contre le développement des mauvaises herbes.